# EUROPÄISCHE PATENTSCHRIFT

(11) **EP 3 192 406 B1**
(45) Veröffentlichungstag und Bekanntmachung des Hinweises auf die Patenterteilung: **11.03.2020**
(21) Anmeldenummer: 17151181.9
(22) Anmeldetag: 12.01.2017
(51) Int. Cl.: A47J 31/34

(54) **HYDRAULISCHER AKTUATOR FÜR EIN HEISSGETRÄNKE-ZUBEREITUNGSGERÄT**
HYDRAULIC ACTUATOR FOR A HOT DRINK PREPARATION DEVICE
ACTIONNEUR HYDRAULIQUE POUR UN APPAREIL DE PRÉPARATION DE BOISSONS CHAUDES

(30) Priorität: 15.01.2016 DE 102016200419
(43) Veröffentlichungstag der Anmeldung: 19.07.2017
(73) Patentinhaber: BSH Hausgeräte GmbH, 81739 München (DE)
(72) Erfinder: Huber, Michael, 6344 Walchsee (AT); Ostermaier, Albert, 83371 Stein a.d. Traun (DE); Siebert, Sebastian, 83278 Traunstein (DE); Haslacher, Christian, 5303 Thalgau (AT)

(56) Entgegenhaltungen:
- WO-A1-2007/129351
- WO-A1-2011/067264
- WO-A1-2014/015570
- AT-B- 258 508

## Beschreibung

Die Erfindung betrifft ein Heißgetränke-Zubereitungsgerät mit einem Fluidtransportsystem.

Heißgetränke-Zubereitungsgeräte, insbesondere Kaffeeautomaten, weisen eine Vielzahl von Teilen und Baugruppen auf, die angesteuert und bewegt werden müssen. Als Kraftquelle für die Bewegung können zum Beispiel elektrische Ventile, Motoren oder Pumpen zum Einsatz kommen. Ein Problem bei der Verwendung der genannten Einheiten besteht darin, dass diese zur Ansteuerung an die Elektronik des Heißgetränke-Zubereitungsgeräts angeschlossen werden müssen, wofür ein zusätzlicher Ausgang auf der Platine der Steuerelektronik eingerichtet werden muss.

In EP 1 472 963 B1 ist eine Einrichtung zur Ausgabe von Milch beschrieben, welche zusammen mit einer Kaffeemaschine zur Erzeugung von Milchkaffee, Cappuccino oder Latte Macchiato betrieben wird. Zur Ausgabe von Milch erfolgt eine Umstellung von einem geschlossenen Zustand in einen offenen Zustand mit Hilfe eines Umstellmittels, welches eine Kolbenzylindereinheit umfasst, mit der ein den Quetschbereich der Schlauchquetschpumpe begrenzendes Bogenteil verschiebbar ist. Zum Betätigen der Kolbenzylindereinheit wird unter Druck stehendes Wasser verwendet, womit der Kolben der Kolbenzylindereinheit beaufschlagbar ist, wobei dieser Vorgang über ein Ventil steuerbar ist.

Aus der WO 2011/067264 A1 ist eine Getränkemaschine bekannt, die ein Druckkolbensystem mit einem Druckkolben aufweist, das einen vorhandenen Druck als Antriebsdruck zur Bewegung des Druckkolbens nutzt.

Es ist eine Aufgabe der vorliegenden Erfindung, ein Heißgetränke-Zubereitungsgerät mit einer einfach zu handhabenden und zu installierenden Aktuatoreinheit anzugeben.

Diese Aufgabe wird durch ein Heißgetränke-Zubereitungsgerät nach Anspruch 1 gelöst. Ein erfindungsgemäßes Heißgetränke-Zubereitungsgerät umfasst demnach ein Fluidtransportsystem. Es weist ein Druckkolbensystem mit einem Druckkolben auf, welches dazu eingerichtet ist, einen in dem Fluidtransportsystem vorhandenen Druck als Antriebsdruck zur Bewegung des Druckkolbens zu nutzen. Ferner weist das Heißgetränke-Zubereitungsgerät eine Brüheinheit, eine Getränkeausgabeeinheit und eine Restfluid-Absaugeinheit zwischen der Brüheinheit und der Getränkeausgabeeinheit zum Absaugen von Restfluid auf, wobei das Druckkolbensystem dazu eingerichtet ist, mit Hilfe der Bewegung des Druckkolbens die Restfluid-Absaugeinheit anzusteuern.

Unter einem Fluidtransportsystem soll ein Transportleitungssystem zwischen einem Tank, welcher das zu transportierende Fluid aufbewahrt, und einem Verteilerventil verstanden werden. Das an einem dem Tank entgegengesetzten Ende der Transportleitung angeordnete Verteilerventil, zum Beispiel ein Dreiwegeventil, dient dazu, das Fluid zu einer Verarbeitungseinheit, wie zum Beispiel ein Brühkopf, oder direkt zu einer Ausgabeeinheit weiterzuleiten. Mit Hilfe der in dem Druckkolbensystem gespeicherten hydraulischen Energie kann ein Stellelement oder ein anderes mechanisches oder hydrodynamisches Funktionselement angetrieben werden. Bei dem erfindungsgemäßen Heißgetränke-Zubereitungsgerät wird also keine zusätzliche, externe Energiequelle und auch kein Anschluss an eine Steuerelektronik benötigt, da die Ansteuerung allein über den in dem Fluidtransportsystem herrschenden Druck erfolgt. Als Zeitpunkt des Stell- oder Schaltvorgangs kann vorteilhaft der Beginn oder das Ende des Betriebs des Heißgetränke-Zubereitungsgeräts genutzt werden. Dies lässt sich zum Beispiel vorteilhaft bei Stell- und Schaltvorgängen nutzen, welche ebenfalls zu Beginn des Betriebs oder nach dem Ende des Betriebs des Heißgetränke-Zubereitungsgeräts stattfinden. Der jeweilige Stellvorgang kann somit automatisiert erfolgen, so dass ein Eingreifen des Benutzers nicht nötig ist und damit der Bedienkomfort verbessert ist.

Weitere besonders vorteilhafte Ausgestaltungen und Weiterbildungen der Erfindung ergeben sich aus den abhängigen Ansprüchen sowie der nachfolgenden Beschreibung, wobei Merkmale verschiedener Ausführungsbeispiele zu neuen Ausführungsbeispielen kombiniert werden können.

In einer bevorzugten Ausgestaltung des erfindungsgemäßen Heißgetränke-Zubereitungsgeräts weist das Druckkolbensystem ein Rückstellelement, vorzugweise eine Rückstellfeder, auf, welches dazu eingerichtet ist, den Druckkolben bei einer Absenkung des Drucks im Fluidtransportsystem in seine Ausgangsposition zurückzubewegen. Auch die Rückbewegung kann als Antriebsbewegung für ein Stellelement oder ein Funktionselement genutzt werden, so dass auch am Ende des Betriebs des Heißgetränke-Zubereitungsgeräts ein Stellvorgang bzw. Steuervorgang ermöglicht ist. Weiterhin kann das Zurückversetzen des Druckkolbens auch zum Zurücksetzen der Stellelemente oder Funktionselemente genutzt werden, so dass diese bei einem erneuten Betrieb des Heißgetränke-Zubereitungsgeräts erst bei einem in dem Fluidtransportsystem vorhandenen Mindestdruck geschaltet werden.

Ein Heißgetränke-Zubereitungsgerät weist regelmäßig eine Fluid-Pumpeneinheit und ein Verteilerventil auf, wobei das Druckkolbensystem erfindungsgemäß zwischen der Fluid-Pumpeneinheit und dem Verteilerventil angeordnet ist. Die Pumpeneinheit kann zum Beispiel eine in dem Fluidtransportsystem befindliche Förderpumpe sein, mit der das Fluid durch das Transportleitungssystem gepumpt wird. Wird nun das Druckkolbensystem dieser Pumpeneinheit nachgeschaltet, so kann der von der Pumpeneinheit erzeugte Druck in dem Transportleitungssystem zur Betätigung des Druckkolbens genutzt werden. Auf diese Weise wird eine automatisierte Aktuatorbewegung zur Verfügung gestellt, ohne dass ein zusätzliches Antriebselement oder externe Energiequellen, wie zum Beispiel ein Stromanschluss, genutzt werden müssen.

Weist das erfindungsgemäße Heißgetränke-Zubereitungsgerät ein Heizsystem in dem Fluid-Transportsystem auf, ist das Druckkolbensystem besonders bevorzugt zwischen dem Heizsystem und der Fluid-Pumpeneinheit angeordnet. Ein Heizsystem kann zum Beispiel eine Art Durchlauferhitzer sein, mit dem das durch das Fluidtransportsystem fließende Fluid aufgewärmt wird, um es anschließend für die Erzeugung eines Heißgetränks zu verwenden. Bei einer solchen Anordnung in dem Fluidtransportsystem lässt sich das Druckkolbensystem direkt hinter der Fluid-Pumpeneinheit platzieren, so dass an dem Druckkolbensystem der vollständige Ausgangsdruck der Fluid-Pumpeneinheit zur Verfügung steht.

In einer effektiven Variante des erfindungsgemäßen Heißgetränke-Zubereitungsgeräts ist das Druckkolbensystem zwischen dem Heizsystem und dem Verteilerventil angeordnet. Da das Heizsystem das in dem Fluidtransportsystem befindliche Fluid erwärmt, wird aufgrund der damit einhergehenden Ausdehnung des Fluids ein erhöhter Druck erzeugt, der von dem Druckkolbensystem dazu genutzt werden kann, eine größere Arbeit zu verrichten als es bei den bereits beschriebenen Ausgestaltungen der Fall ist.

In einer besonders effektiven Variante des erfindungsgemäßen Heißgetränke-Zubereitungsgeräts ist das Druckkolbensystem an einem Abzweig zwischen der Fluid-Pumpeneinheit und dem Verteilerventil angeordnet. Das Druckkolbensystem muss folglich nicht direkt in einer Transportleitung des Fluidtransportsystems integriert sein, sondern es kann eine Abzweigungsleitung von der Transportleitung abzweigen, an die das Druckkolbensystem angeschlossen ist. Dies erlaubt eine erhöhte Flexibilität bei der Positionierung des Druckkolbensystems in dem Heißgetränke-Zubereitungsgerät. Beispielsweise kann das Druckkolbensystem so in der Nähe des zu betätigenden Funktionselements angeordnet sein, so dass ein Kraftübertragungselement zwischen dem Druckkolbensystem und dem Funktionselement sehr klein dimensioniert sein oder entfallen kann. Außerdem ermöglicht eine Positionierung nahe bei dem zu betätigenden Funktionselement eine Minimierung eines Energieverlusts bei der Übertragung der Stellenergie von dem Druckkolbensystem zu dem Funktionselement.

Das erfindungsgemäße Heißgetränke-Zubereitungsgerät weist ferner eine Brüheinheit, eine Getränkeausgabeeinheit und eine dazwischen angeordnete Restfluid-Absaugeinheit zum Absaugen von Restfluid auf. Das Druckkolbensystem kann also durch die Bewegung des Druckkolbens die Restfluid-Absaugeinheit ansteuern. Mit Hilfe einer Bewegung des Druckkolbens wird bei dieser erfindungsgemäßen Variante ein Saugkolben der Restfluid-Absaugeinheit angetrieben, welcher nach dem Betrieb des Heißgetränke-Zubereitungsgeräts zwischen der Brüheinheit und der Getränkeausgabeeinheit zurückbleibendes Restfluid absaugt. Beispielsweise kann eine Rückstellung des Druckkolbens durch ein Rückstellelement nach Ende des Betriebs des Heißgetränke-Zubereitungsgeräts dazu genutzt werden, einen Pumpvorgang durch die Absaugeinheit anzutreiben. Umgekehrt wird der Saugkolben der Absaugeinheit in seine Ausgangsposition zurückversetzt, wenn das Heißgetränke-Zubereitungsgerät gestartet wird, der Druck in dem Fluidtransportsystem steigt und den Druckkolben des Druckkolbensystems verschiebt. Die Absaugeinheit ist in der Patentanmeldung mit der Anmeldernummer 201502963 mit dem Titel "Vorrichtung zum Entleeren einer Getränkeausgabeleitung einer Heißgetränke-Zubereitungseinrichtung" desselben Anmelders vom selben Tag ausführlich beschrieben, deren diesbezügliche Offenbarung zum Inhalt der vorliegenden Anmeldung gemacht wird.

Besonders bevorzugt umfasst das erfindungsgemäße Heißgetränke-Zubereitungsgerät eine mechanische oder hydraulische oder pneumatische Kopplung zwischen dem Druckkolbensystem und der Restfluid-Absaugeinheit. Beispielsweise kann zwischen dem Druckkolbensystem und einer zu betätigenden Funktionseinheit ein mechanisches Übertragungselement, wie zum Beispiel eine oder mehrere Stangen, vorhanden sein. Zur Realisierung einer hydraulischen Kopplung kann zum Beispiel eine Leitung oder ein Kanal bzw. eine Rohrleitung ausgebildet sein, mit der ein Kolbendruck des Druckkolbensystems auf ein Funktionselement übertragen wird. Als pneumatische Kopplung kann zum Beispiel ein mit Luft oder einem anderen Gas gefülltes Leitungssystem zwischen dem Druckkolbensystem und dem Funktionselement angeordnet sein.

Das Druckkolbensystem des erfindungsgemäßen Heißgetränke-Zubereitungsgeräts kann als Aktuatoreinheit insbesondere zur Ansteuerung einer der folgenden Einheiten eingerichtet sein:
- ein Druckanzeigeelement, welches einen in dem Fluidtransportsystem vorherrschenden Druck anzeigt,
- ein Verriegelungsmechanismus zur Arretierung von Verschlüssen von Geräteöffnungen oder entnehmbaren Bauelementen,
- Lüftungsklappen,
- eine Positionierungseinheit eines Getränkeauslaufs.

Wird mit dem Druckkolbensystem ein Druckanzeigeelement betrieben, welches den in dem Fluidtransportsystem vorherrschenden Druck anzeigt, so kann vorteilhaft die Tatsache genutzt werden, dass sich eine Kolbenbewegung des Druckkolbens des Druckkolbensystems proportional zu dem in dem Fluidtransportsystem vorherrschenden Druck verhält. Beispielsweise ist bei dem Einsatz einer Rückstellfeder eine Auslenkung des Druckkolbens proportional zu dem auf den Druckkolben wirkenden Druck des Fluidtransportsystems.

Wird ein Verriegelungsmechanismus betätigt, so kann vorteilhaft eine solche Verriegelung automatisiert zum Start und am Ende eines Betriebs eines Heißgetränke-Zubereitungsgeräts ausgelöst werden, weil sich zu den genannten Zeitpunkten die Druckverhältnisse in dem Fluidtransportsystem ändern. Die Schließ- oder Verriegelungskraft steht folglich mit oder kurz nach dem Einschalten des Zubereitungsgeräts zur Verfügung, sobald also von jenem eine Gefahr für den Benutzer ausgehen könnte. Nach Abbau des Drucks in dem Zubereitungsgerät und damit nach Wegfall eines wesentlichen Gefahrenpotenzials dagegen lassen sich das Zubereitungsgerät öffnen oder Teile davon entnehmen.

Ebenso kann die Korrelation der Bewegung des Druckkolbens mit dem Betriebszustand des Heißgetränke-Zubereitungsgeräts bei der automatisierten Betätigung der Lüftungsklappen genutzt werden, welche zum Beispiel nur während des Betriebs des Heißgetränke-Zubereitungsgeräts geöffnet bleiben sollen.

Die zeitliche Korrelation der Bewegung des Druckkolbens mit dem Betriebszustand des Heißgetränke-Zubereitungsgeräts kann außerdem vorteilhaft bei der automatisierten Betätigung der Positionierungseinheit eines Getränkeauslaufs genutzt werden, da üblicherweise eine Änderung der Position des Getränkeauslaufs ebenfalls zum Start und am Ende des Betriebs des Heißgetränke-Zubereitungsgeräts erfolgt.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
- FIG 1: ein Heißgetränke-Zubereitungsgerät gemäß einem Ausführungsbeispiel der Erfindung mit einer Aktuatoreinheit,
- FIG 2: ein Fluidtransportsystem des in FIG 1 gezeigten Heißgetränke-Zubereitungsgeräts in einem ersten Betriebszustand,
- FIG 3: das in FIG 2 gezeigte Fluidtransportsystem in einem zweiten Betriebszustand,
- FIG 4: ein Heißgetränke-Zubereitungsgerät gemäß einem Ausführungsbeispiel der Erfindung, bei dem eine Absaugeinheit mit Hilfe der Aktuatoreinheit des Heißgetränke-Zubereitungsgerät angetrieben wird.

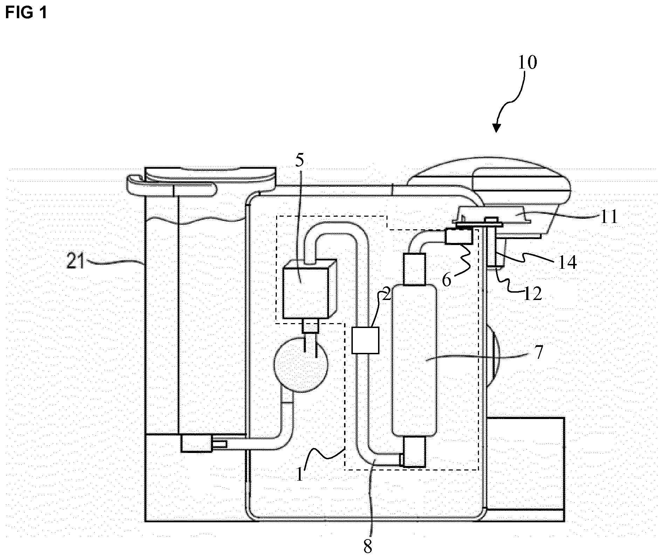

In FIG 1 ist ein Kaffeeautomat als herkömmliches Heißgetränke-Zubereitungsgerät 10 gezeigt. Der Kaffeeautomat 10 umfasst einen Wassertank 21, von dem aus Wasser über ein Fluidtransportsystem 1, welches mit einer gestrichelten Linie markiert ist, zu einer Brüheinheit 11 transportiert wird. Von der Brüheinheit wird der filtrierte Kaffee über eine Getränkeausgabeleitung 14 zu einer Getränkeausgabeeinheit 12 transportiert. Das Fluidtransportsystem 1 umfasst eine Förderpumpe 5, welche das in dem Wassertank 21 befindliche Wasser ansaugt und durch eine Fluidtransportleitung 8 weiter zu einem Heizsystem 7 pumpt. In dem Heizsystem 7 wird das Wasser erwärmt und anschließend über ein Verteilerventil 6 zu der Brüheinheit 11 transportiert. Der Kaffeeautomat 10 umfasst weiterhin eine hydraulische Aktuatoreinheit 2, die während des Betriebs der Förderpumpe 5 durch den Überdruck, der in dem Fluidtransportsystem 1 herrscht, betätigt wird. Der in dem Fluidtransportsystem 1 vorherrschende Druck wird also zusätzlich zu dem Zweck des Wassertransports noch zur Betätigung der Aktuatoreinheit 2 verwendet. Die Aktuatoreinheit 2 kann für eine Vielzahl von mechanischen Umschalt- oder Umstellfunktionen genutzt werden.

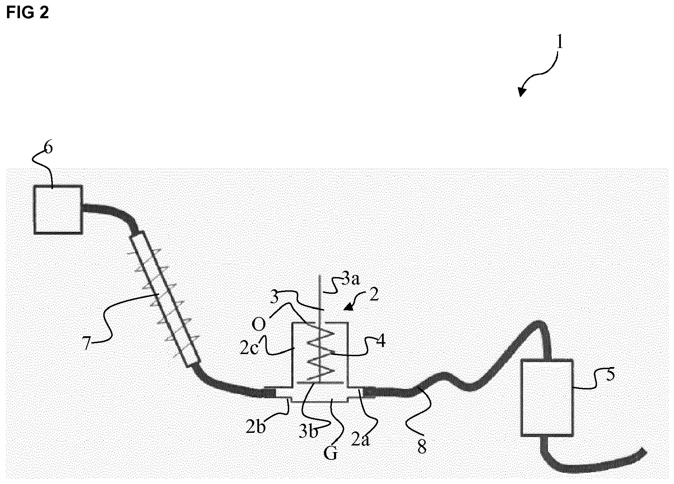

Das Fluidtransportsystem 1 umfasst gemäß FIG 2 eine Förderpumpe 5, mit der ein Fluid, zum Beispiel Wasser, durch eine Fluidtransportleitung 8 zu einem Heizsystem 7 und von dort weiter zu einem Verteilerventil 6 gepumpt wird. Zwischen der Förderpumpe 5 und dem Heizsystem 7 ist die bereits in FIG 1 schematisch gezeigte hydraulische Aktuatoreinheit 2 angeordnet. Die Aktuatoreinheit 2 umfasst einen Einlass 2a und einen Auslass 2b, welche jeweils an die Fluidtransportleitung 8 angeschlossen sind. Weiterhin weist die hydraulische Aktuatoreinheit 2 einen Zylinderraum 2c auf, in dem ein Druckkolben 3 angeordnet ist. Der Druckkolben 3 umfasst eine Kolbenstange 3a und einen Kolbenschaft 3b, wobei der Kolbenschaft 3b der Fluidtransportleitung 8 bzw. der Grundfläche G des Zylinderraums 2c der Aktuatoreinheit 2, an der sich der Einlass 2a und der Auslass 2b befinden, zugewandt angeordnet ist. Außerdem ist eine Rückstellfeder 4 an der Kolbenstange 3a angeordnet und stützt sich auf die Oberfläche O des Zylinderraums 2c, welche von dem Kolbenschaft 3b des Druckkolbens 3 abgewandt ist. Mit der Kolbenstange 3a kann ein mechanisches, hydraulisches oder pneumatisches Übertragungselement verbunden sein, mit dem eine Bewegung des Druckkolbens 3 bzw. der Kolbenstange 3a des Druckkolbens 3 an ein anzusteuerndes Schalt- oder Stellelement (nicht gezeigt) übertragen wird. In FIG 2 ist das in FIG 1 gezeigte Fluidtransportsystem 1 in einem Betriebszustand des Heißgetränke-Zubereitungsgeräts 10 gezeigt, in dem kein Überdruck in dem Fluidtransportsystem 1 vorherrscht.

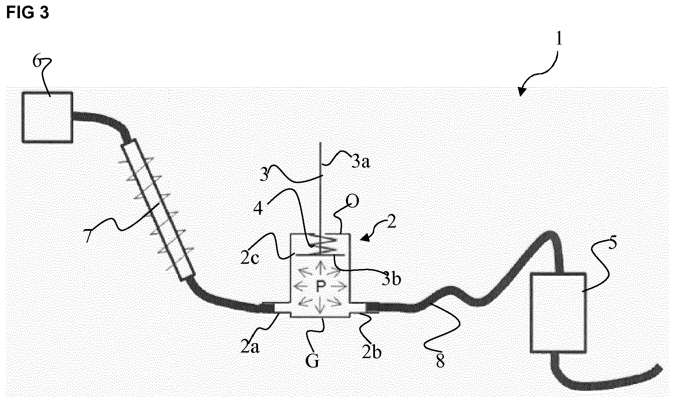

In FIG 3 ist das in FIG 2 gezeigte Fluidtransportsystem 1 in einem Betriebszustand gezeigt, in dem ein Überdruck in dem Fluidtransportsystem 1 vorherrscht. Dies ist zum Beispiel der Fall, wenn die Förderpumpe 5 in Betrieb ist und ein Fluid, insbesondere Wasser, durch das Fluidtransportsystem 1 fördert. In diesem Betriebszustand füllt sich ein Druckbereich P in dem Zylinderraum 2c der Aktautoreinheit 2, wobei sich der Druckbereich P zwischen dem Kolbenschaft 3b und der dem Einlass 2a und dem Auslass 2b zugewandten Zylinderbasis bzw. Grundfläche G des Zylinderraums 2c befindet. Der Druckkolben 3 wird dabei gegen die Federkraft der Rückstellfeder 4 nach oben, d. h. in Richtung der Oberfläche O des Zylinderraums 2c der Aktuatoreinheit 2 verschoben. Diese Kolbenbewegung kann, wie bereits erwähnt, an ein anzusteuerndes Schalt- oder Stellelement (nicht gezeigt) übertragen werden.

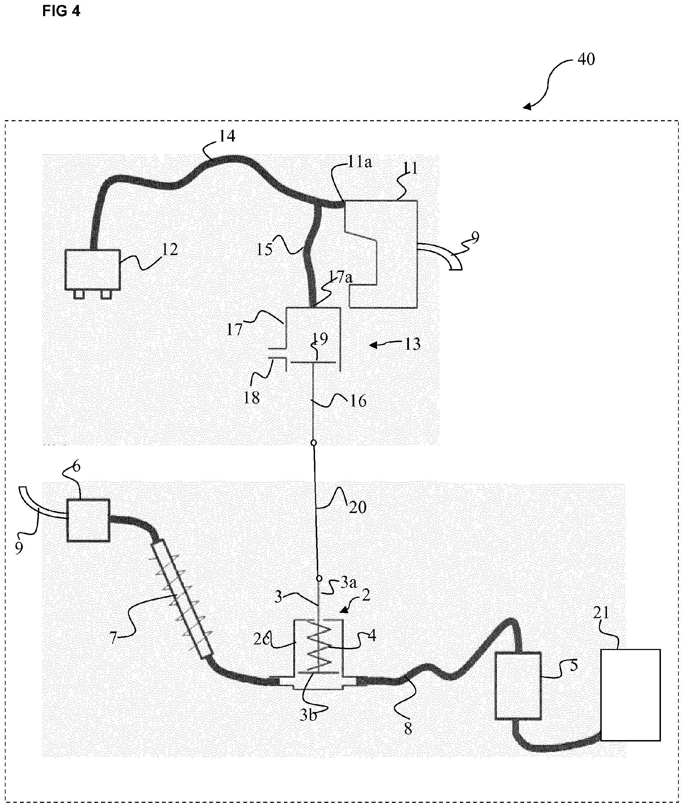

In FIG 4 ist ein Ausführungsbeispiel eines Heißgetränke-Zubereitungsgeräts 40 gemäß der Erfindung gezeigt, bei dem die von einer in einem Fluidtransportsystem 1 angeordneten hydraulischen Aktuatoreinheit 2 durchgeführte Kolbenbewegung zur Ansteuerung einer Absaugeinheit 13 verwendet wird, mit der ein in einer Ausgabeleitung 14 zurückbleibendes Restfluid nach dem Betrieb entfernt werden kann. Die Ausgabeleitung 14 ist zwischen einer Brüheinheit 11 und einer Getränkeausgabeeinheit 12 angeordnet und über eine Abzweigungsleitung 15 mit der Absaugeinheit 13 verbunden. Die Absaugeinheit 13 umfasst einen Zylinder 17, in dem ein Saugkolben 16 auf und ab bewegbar angeordnet ist. Der Zylinder 17 weist an seiner der Abzweigungsleitung 5 zugewandten Oberfläche eine Öffnung 17a auf, durch die in dem System aus Abzweigungsleitung 15 und Getränkeausgabeleitung 14 befindliches Restfluid in den Zylinderraum des Zylinders 17 angesaugt werden kann. Zusätzlich ist an der Seitenwand des Zylinders 17 ein Restfluidausgang 18 ausgebildet, durch den in den Zylinderraum des Zylinders 17 angesaugtes Restfluid abfließen kann. Die Brüheinheit 11 ist über eine Verbindungsleitung 9 an ein Verteilerventil 6 des Fluidtransportsystems 1 des Heißgetränke-Zubereitungsgeräts 40 angeschlossen. Die Absaugeinheit 13 ist in der Patentanmeldung 201502963 des Anmelders ausführlich beschrieben, deren diesbezügliche Offenbarung zum Inhalt auch der vorliegenden Anmeldung gemacht wird.

In dem in FIG 4 gezeigten Zustand ist die Förderpumpe 5 des Heißgetränke-Zubereitungsgeräts 40 gerade nicht in Betrieb, so dass in der Fluidtransportleitung 8 kein Überdruck herrscht. Mithin befindet sich der Druckkolben 3 gerade in einer unteren Position, in der der Kolbenschaft 3b des Druckkolbens 3 der Grundfläche G des Zylinderraums 2c der Aktuatoreinheit 2 nahe steht. Wird nun die Förderpumpe 5 betätigt, so wird der Druckkolben 3 in Richtung der Oberfläche O des Zylinderraums 2c gegen die Federkraft der Rückstallfeder 4 verschoben. Über ein Betätigungselement 20 wird die Kolbenbewegung des Druckkolbens 3 auf den Saugkolben 16 der Absaugeinheit 13 übertragen, so dass der Kolbenschaft 19 des Saugkolbens 16 zu der der Abzweigungsleitung 5 zugewandten Oberfläche des Zylinders 17 der Absaugeinheit 13 hin verschoben wird. Wird anschließend der Betrieb der Förderpumpe 5 nach Ausgabe eines Heißgetränks beendet, so reduziert sich der Druck in der Fluidtransportleitung 8. Der Druckkolben 3 wird daraufhin durch die Federkraft der Rückstellfeder 4 in seine Ausgangsposition zurückbewegt, so dass der Kolbenschaft 3b des Druckkolbens 3 wieder nahe bei der Grundfläche G des Zylinderraums 2c der Aktuatoreinheit 2 positioniert ist. In Folge der Rückbewegung des Druckkolbens 3 wird der Saugkolben 16 der Absaugeinheit 13 zu einer Saugbewegung veranlasst, wobei der Kolbenschaft nach unten, d. h. von der Öffnung 17a des Zylinderraums des Zylinders 17 der Absaugeinheit 13 wegbewegt wird. Passiert der Kolbenschaft 19 des Saugkolbens 16 den Auslass 18, so kann das aus der Ausgabeleitung 14 abgesaugte Restfluid durch den Auslass 18 abfließen. Somit erfolgt nach dem Betrieb des Heißgetränke-Zubereitungsgeräts 40 automatisch eine Reinigung der Ausgabeleitung 14, so dass bei einer erneuten Getränkeausgabe die Flüssigkeit des ausgegeben Getränks nicht mit in der Ausgabeleitung zurückgebliebenem Restfluid vermischt wird. Auf diese Weise wird die Getränkequalität verbessert.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Fluidtransportsystem
- 2: Druckkolbensystem/ Aktuatoreinheit
- 2a: Einlass
- 2b: Auslass
- 2c: Zylinderraum
- 3: Druckkolben
- 3a: Kolbenstange
- 3b: Kolbenschaft
- 4: Rückstellfeder
- 5: Förderpumpe
- 6: Verteilerventil
- 7: Heizsystem
- 8: Fluidtransportleitung
- 9: Verbindungsleitung
- 10: Heißgetränke-Zubereitungsgerät
- 11: Brüheinheit
- 11a: Ausgang der Brüheinheit
- 12: Ausgabeeinheit
- 13: Absaugeinheit
- 14: Ausgabeleitung
- 15: Abzweigungsleitung
- 16: Saugkolben
- 17: Zylinderraum
- 17a: Öffnung
- 18: Auslass
- 19: Kolbenschaft
- 20: Betätigungselement
- 21: Wassertank
- 40: Heißgetränke-Zubereitungsgerät

- G: Grundfläche
- O: Oberfläche
- P: Druck/ Druckbereich

## Patentansprüche

1. Heißgetränke-Zubereitungsgerät (10, 40), aufweisend ein Fluidtransportsystem (1), wobei das Fluidtransportsystem (1) ein Druckkolbensystem (2) mit einem Druckkolben (3) aufweist, welches dazu eingerichtet ist, einen in dem Fluidtransportsystem (1) vorhandenen Druck als Antriebsdruck zur Bewegung des Druckkolbens (3) zu nutzen, ferner aufweisend eine Brüheinheit (11), eine Getränkeausgabeeinheit (12) und eine Restfluid-Absaugeinheit (13) zwischen der Brüheinheit (11) und der Getränkeausgabeeinheit (12) zum Absaugen von Restfluid, **dadurch gekennzeichnet, dass** das Druckkolbensystem (2) dazu eingerichtet ist, mit Hilfe der Bewegung des Druckkolbens (3) die Restfluid-Absaugeinheit (13) anzusteuern.

2. Heißgetränke-Zubereitungsgerät nach Anspruch 1, **dadurch gekennzeichnet, dass** das Druckkolbensystem (2) eine Rückstellfeder (4) aufweist, welche dazu eingerichtet ist, den Druckkolben (3) bei einer Absenkung des Drucks im Fluidtransportsystem (1) in seine Ausgangsposition zurückzubewegen.

3. Heißgetränke-Zubereitungsgerät nach Anspruch 1 oder 2, mit einer Fluid-Pumpeneinheit (5) und einem Verteilerventil (6), **dadurch gekennzeichnet, dass** das Druckkolbensystem (2) zwischen der Fluid-Pumpeneinheit (5) und dem Verteilerventil (6) angeordnet ist.

4. Heißgetränke-Zubereitungsgerät nach Anspruch 3, mit einem Heizsystem (7) in dem Fluidtransportsystem (1), **dadurch gekennzeichnet, dass** das Druckkolbensystem (2) zwischen dem Heizsystem (7) und der Fluid-Pumpeneinheit (5) angeordnet ist.

5. Heißgetränke-Zubereitungsgerät nach Anspruch 3, **dadurch gekennzeichnet, dass** das Druckkolbensystem (2) zwischen dem Heizsystem (7) und dem Verteilerventil (6) angeordnet ist.

6. Heißgetränke-Zubereitungsgerät nach einem der Ansprüche 3 bis 5, **dadurch gekennzeichnet, dass** das Druckkolbensystem (2) an einem Abzweig zwischen der Fluid-Pumpeneinheit (5) und dem Verteilerventil (6) angeordnet ist.

7. Heißgetränke-Zubereitungsgerät nach einem der vorhergehenden Ansprüche, **gekennzeichnet durch** eine mechanische oder hydraulische oder pneumatische Kopplung zwischen dem Druckkolbensystem (2) und der Restfluid-Absaugeinheit (13).

8. Heißgetränke-Zubereitungsgerät nach einem der Ansprüche 1 bis 7, **dadurch gekennzeichnet, dass** das Druckkolbensystem (2) als Aktuatoreinheit zur Ansteuerung einer der folgenden Einheiten eingerichtet ist:
- ein Druckanzeigeelement, welches einen in dem Fluidtransportsystem (1) vorherrschenden Druck anzeigt,
- ein Verriegelungsmechanismus zur Arretierung von Verschlüssen von Geräteöffnungen oder entnehmbaren Bauelementen,
- Lüftungsklappen,
- eine Positionierungseinheit eines Getränkeauslaufs.

## Claims

1. Hot beverage preparation device (10, 40), having a fluid transport system (1), wherein the fluid transport system (1) has a pressure piston system (2) with a pressure piston (3) which is designed to use a pressure present in the fluid transport system (1) as drive pressure to move the pressure piston (3), further having a brewing unit (11), a beverage dispensing unit (12) and a residual fluid suction unit (13) between the brewing unit (11) and the beverage dispensing unit (12) for sucking up residual fluid, **characterised in that** the pressure piston system (2) is designed to control the residual fluid suction unit (13) with the aid of the movement of the pressure piston (3).

2. Hot beverage preparation device according to claim 1, **characterised in that** the pressure piston system (2) has a return spring (4) which is designed to move the pressure piston (3) back into its starting position when the pressure in the fluid transport system (1) is reduced.

3. Hot beverage preparation device according to claim 1 or 2, having a fluid pump unit (5) and a distributor valve (6), **characterised in that** the pressure piston system (2) is arranged between the fluid pump unit (5) and the distributor valve (6).

4. Hot beverage preparation device according to claim 3, having a heating system (7) in the fluid transport system (1), **characterised in that** the pressure piston system (2) is arranged between the heating system (7) and the fluid pump unit (5).

5. Hot beverage preparation device according to claim 3, **characterised in that** the pressure piston system (2) is arranged between the heating system (7) and the distributor valve (6).

6. Hot beverage preparation device according to one of claims 3 to 5, **characterised in that** the pressure piston system (2) is arranged on a branch between the fluid pump unit (5) and the distributor valve (6).

7. Hot beverage preparation device according to one of the preceding claims, **characterised by** a mechanical or hydraulic or pneumatic coupling between the pressure piston system (2) and the residual fluid suction unit (13).

8. Hot beverage preparation device according to one of claims 1 to 7, **characterised in that** the pressure piston system (2) is designed as an actuator unit for controlling one of the following units:
- a pressure indicator element which indicates a pressure prevailing in the fluid transport system (1),
- a locking mechanism for locking closures of device openings or removable components,
- ventilation flaps,
- a positioning unit of a beverage outlet.

## Revendications

1. Appareil de préparation de boissons chaudes (10, 40), présentant un système de transport de fluide (1), dans lequel le système de transport de fluide (1) présente un système à piston de compression (2) avec un piston de compression (3), qui est adapté pour utiliser une pression présente dans le système de transport de fluide (1) en tant que pression d'entraînement destinée au mouvement du piston de compression (3), présentant en outre une unité de mise en ébullition (11), une unité de distribution de boisson (12) et une unité d'aspiration de fluide résiduel (13) entre l'unité de mise en ébullition (11) et l'unité de distribution de boisson (12) destinée à l'aspiration de fluide résiduel, **caractérisé en ce que** le système à piston de compression (2) est adapté pour commander l'unité d'aspiration de fluide résiduel (13) à l'aide du mouvement du piston de compression (3).

2. Appareil de préparation de boissons chaudes selon la revendication 1, **caractérisé en ce que** le système à piston de compression (2) présente un ressort de rappel (4) qui est adapté pour replacer le piston de compression (3) dans sa position de départ lors d'un abaissement de la pression dans le système de transport de fluide (1).

3. Appareil de préparation de boissons chaudes selon la revendication 1 ou 2, avec une unité de pompe à fluide (5) et une soupape de répartition (6), **caractérisé en ce que** le système à piston de compression (2) est disposé entre l'unité de pompe à fluide (5) et la soupape de répartition (6).

4. Appareil de préparation de boissons chaudes selon la revendication 3, avec un système de chauffage (7) dans le système de transport de fluide (1), **caractérisé en ce que** le système à piston de compression (2) est disposé entre le système de chauffage (7) et l'unité de pompe à fluide (5).

5. Appareil de préparation de boissons chaudes selon la revendication 3, **caractérisé en ce que** le système à piston de compression (2) est disposé entre le système de chauffage (7) et la soupape de répartition (6).

6. Appareil de préparation de boissons chaudes selon l'une des revendications 3 à 5, **caractérisé en ce que** le système à piston de compression (2) est disposé au niveau d'une bifurcation entre l'unité de pompe à fluide (5) et la soupape de répartition (6).

7. Appareil de préparation de boissons chaudes selon l'une des revendications précédentes, **caractérisé par** un couplage mécanique ou hydraulique ou pneumatique entre le système à piston de compression (2) et l'unité d'aspiration de fluide résiduel (13).

8. Appareil de préparation de boissons chaudes selon l'une des revendications 1 à 7, **caractérisé en ce que** le système à piston de compression (2) est adapté en tant qu'unité d'actionneur destinée à la commande de l'une des unités suivantes :
- un élément d'affichage de pression qui affiche une pression régnant dans le système de transport de fluide (1),
- un mécanisme de verrouillage destiné au blocage de bouchons d'ouvertures d'appareil ou de composants amovibles,
- des volets de ventilation,
- une unité de positionnement d'un distributeur de boissons.
